# EUROPEAN PATENT SPECIFICATION

(11) **EP 0 753 135 B1**
(45) Date of publication and mention of the grant of the patent: **18.12.2002**
(21) Application number: 96900487.8
(22) Date of filing: 19.01.1996
(51) Int. Cl.: G01M 3/28, G01M 3/02

(54) **TEST PLUG FOR PIPES**
TESTSTOPFEN FÜR ROHRE
BOUCHON POUR TESTER LES CONDUITES

(30) Priority: 23.01.1995 CA 2141956; 29.03.1995 CA 2145792; 03.05.1995 US 433546; 07.09.1995 US 524877
(43) Date of publication of application: 15.01.1997
(73) Proprietor: Berube, Guy, Sarnia, Ontario N7V 1Y3 (CA); Carson, Glenn, Sarnia, Ontario N7S 5G5 (CA)
(72) Inventor: Berube, Guy, Sarnia, Ontario N7V 1Y3 (CA); Carson, Glenn, Sarnia, Ontario N7S 5G5 (CA)
(74) Representative: Weydert, Robert
(86) International application number: CA9600032
(87) International publication number: WO96023204

(56) References cited:
- DE-B- 1 049 124
- GB-A- 329 401
- US-A- 2 241 526

## Description

This invention relates to a test plug for pipes.

### BACKGROUND TO THE INVENTION

In the fabrication of fluid flow systems, whether they be for the purposes of conveying liquid such as petro-chemicals, or gases such as natural gas, or even fluidized cereals as is common in the cereal processing industry, the use of conduits or pipes is common and replete. From a fabrication point of view, pipes can only be manufactured to a finite length and therefore, various lengths or elbows must be connected together in order to structure the conduit fluid conveyance means. This is accomplished by welding butt ends of pipes together or to elbows etc., or alternatively, to weld the end of a pipe to a butt flange and to juxtapose two butt flanges together by means commonly known, for example, use of bolts through each juxtaposed annular portions of each butt flange. Generally, such flanges co-operatively employ gaskets as sealing elements.

It is increasingly desired to have these welds tested for the purposes of determining whether there is any leakage. Particularly, in the petro-chemical industry, it is now being mandated that the amount of fluid evaporating or escaping from any weld or flange/flange interface be reduced to allowable limits which, up to now, have been about 2 liters per annum to less than a ¼ of a liter per annum per flange/flange or weld interface. When one considers that in petro-chemical plants there are thousands of such welds or butt flanges, the task of testing each of them becomes onerous and costly. A prior art test plug for pipes is disclosed in DE-A-1 049 124, on which the two part-form of independent claim 1 is based.

Another known pipe joint tester is disclosed in US-A-2,241,526 in which two sealing rings are disposed on the opposite ends of an annular spacer member and spaning the radial distance between the inner body member of the pipe joint tester and the interior of the pipe or a protective member positioned in the end of a coupling arranged on the end of the pipe. In GB-A-329,401 an apparatus for testing pipe joints for leakage is disclosed having inflatable seal tubes.

### THE INVENTION

In accordance with the invention, there is provided a plug assembly for sealing an interior surface segment of a pipe having an internal diameter, said plug assembly comprising:
a) an annular body with oppositely facing annular ends and defining, on its outer perimeter, a recess between the annular ends;
b) a pair of bosses, each of said bosses being respectively adjacent to the annular ends of said annular body and coaxially therewith;
c) a pair of resilient annular members (R₁, R₂) adapted to be respectively juxtaposed between each of said bosses and said annular ends of the annular body;
d) means for urging the bosses respectively towards said annular body thereby deforming said resilient members (R₁, R₂) in a radially outward direction against the internal surface of said pipe so as to form a sealed annular space (S) therebetween, whereby the sealed annular space (S) is defined between said recess on said annular body, the pipe internal surface and said resilient members (R₁, R₂) when said resilient members (R₁,R₂) are urged against the internal surface of said pipe; and
e) a means communicating through said plug assembly to said annular space (S) whereby a hydrostatic fluid may be introduced into said space (S);
characterized in that said plug assembly includes a vent extending therethrough for providing communication between interior segments of said pipe (32) on opposite ends of said plug assembly.

The test plug can be used to test pipes, with an internal diameter of approximately ½ inch (1.75cm) and with modification to as great as what is desired, say even 6 to 10 feet (1.8 to 3 m), or more.

The test plug can be hand carried by one or two workers, assembled within the diameter of a pipe to be tested, temporarily sealed therein so as to allow a testing step to take place which tests the integrity between an annular pipe segment and the test plug, the annular pipe segment generally including a welding interface or a flange interface, or other surface, in order to determine if this region leaks at all, and if it does, to what extent.

Particularly, the urging means (d) may be a shaft which extends between said bosses, preferably with one of the bosses being integral to the shaft, the opposite end of the shaft being threaded so as to provide means for urging the resilient annular members, respectively between an adjacent annular face and boss in order to seal the diameter of the pipe, there to define the plenum. In one embodiment, the communicating means (e) communicates through the shaft from its threaded end and provides communication means to the recess in the annular body, which preferably is a peripheral annular recess or race.

In another embodiment, there may be a pair of communicating means to the peripheral annular recess defined by the annulus and the urging means being a plurality of axially oriented circumferentially disposed bolts, in which case each boss may be an annulus. In order to further reduce weight, the annulus may be aluminum wherein the outer annular recess is milled from cylindrical aluminum stock; and the bosses, fabricated either from steel or aluminum solid rod or square stock and appropriately milled.

In above noted embodiments, the hydrostatic testing media is a fluid-like liquid, preferably water, which is inserted into the plug after its sealing engagement within and communicating with the inner diameter of that selected pipe space which now defines the testing plenum is itself defined by the plug and the internal pipe space diameter. Into the testing plenum, the testing media is flowed, via conduits through the plug; then, pressurized to test the integrity of that portion of the pipe that is in juxtaposed communication with the hydrostatically filled testing plenum.

In a variation of the aforesaid embodiments, the "test plug" is also an isolating-monitoring plug; namely, one that isolates pipe space from a region or interface while allowing monitoring of that pipe space on the obverse side to the test-isolation monitoring plug from that pipe interface that is to be either tested, or to which a weld is to take place, for instance, the creation of a pipe-weld-pipe interface or a pipe-weld-flange interface or any other similar interface that is to be tested.

Either one or two annular bosses may be selected, if one, the opposite boss is a disk boss with front and obverse faces.

There is also disclosed a method of applying a hydrostatic pressure to the interior surface of a segment of a pipe having an internal diameter, said method comprising the steps of:
1) positioning the plug assembly of the invention within said pipe, at said segment;
2) urging said bosses towards said annular body, thereby creating said sealed annular space;
3) filling said annular space with a hydrostatic fluid, under pressure, through said means communicating through said plug assembly;
4) establishing a pressure within said annular space;

Further advantageous features of the apparatus and method are defined in the dependent claims 2 to 15 and 17 to 23, respectively.

### DESCRIPTION OF THE DRAWINGS

The invention will now be described by way of example and with reference to the accompanying drawings:
Figure 1 is an assembly perspective view of a test plug, according to the invention, particularly suited for pipe diameters up to 3.5" (8.9cm), approximately;
Figure 2 is a sectional view in preliminary application of the plug of Figure 1 into a butt flange pipe weld interface, the integrity of which is to be tested.
Figure 2A is the same as Figure 2 showing the fitting of the plug in sealed position;
Figure 2B is an orthogonal cross-section to that of Figure 2 and 2A further showing testing;
Figure 3 is a cross section along lines III-III of Figure 2;
Figure 4 is a partially axially cross-sectional view of an alternative embodiment of pipe plug with venting, particularly suitable for larger diameter pipes of up to about 8" (20 cm);
Figure 5 is a partial section illustrative of the testing sequence for testing the integrity of the pipe flange welded interface;
Figure 6 is an end plan view of yet a third embodiment of test plug, allowing a central cavity through the plug and particularly adapted to test pipes of internal diameters of 8" (20 cm) or more;
Figure 7 is an axial section along lines VII-VII of Figure 6; and,
Figure 8 is a diametrical cross-section of another embodiment of test plug of the invention, wherein one annular boss substantially occupies the total internal diameter of the plug, and hence is a disk, while providing an aperture therethrough communicating to a channel therewith for pressure or content monitoring of internal pipe space, the opposite boss being an annulus.
Figure 8A is a section of the flange-weld-pipe interface of Figure 8 but illustrating an annealing step to anneal the weld, the test plug shown in phantom.

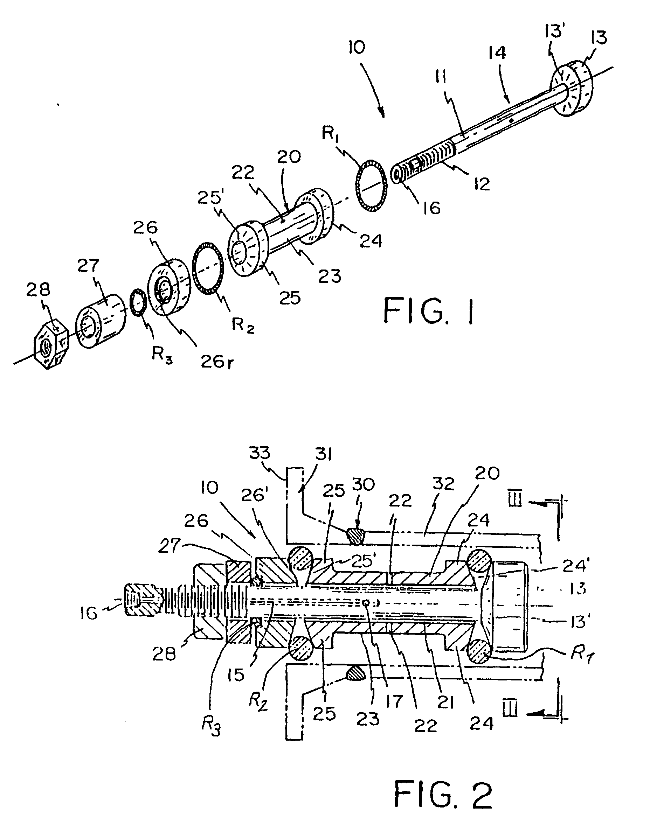

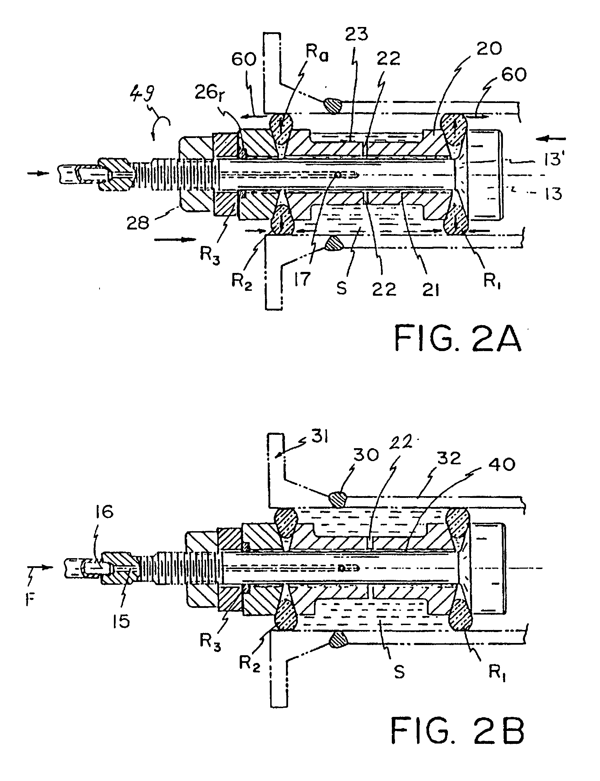

Referring to Figures 1 and 2, a test plug is generally shown as (10) and is suitable for testing the integrity of a welded discontinuity (30) like a flange (31)-weld (30)-pipe (32) interface. The flange (31) generally is a standard butt flange, as will be apparent hereafter, while the pipe or conduit (32) is generally of a diameter up to approximately 18" (45.7 cm). The welded discontinuity (30), is a weld which holds the flange (31) to the end of the pipe (32) so that a corresponding flange of a next pipe run may be bolted thereto each butt annular surface (33) of each flange (31) juxtaposed. Initially, it is the weld interface (30) whose integrity is to be determined; whether or not there are unseen fissures or apertures which may allow leakage of a fluid which will pass through the conduit (32) when in application as in the petro-chemical environment or otherwise. A bolted flange-flange interface could similarly be tested, as could any other pipe discontinuity.

The plug (10) includes a cylindrical shaft (11) that at one end has a threaded shank (12) and at the other end, an integral boss, plug or disk (13) so as to form an integral shaft component (14); the disk (13) has an inner bevelled or truncated cone-like peripheral surface (13'), as shown. The shaft (11) defines an internal bore (15) communicating with a flaring outer or distal end (16) that acts as an attachment means to communicate the bore to a water pressure source that, during testing, acts as a pressure media as will be explained. The bore (15) extends approximately midway into and along the longitudinal axis of the shaft (11), as more clearly seen in phantom in Figure 2 and in the cross section Figure 2B, and communicates with diametrically oriented channels (17), which communicate to the outside diameter surface of the shaft (11) - see Figure 2B.

The shaft (11) is adapted to pass through an annular piece, sometimes referred to as the annulus, generally referenced as (20) having an internal bore (21) sized larger than the external diameter of the shaft (11) and having at least a radial bore, shown in figures 1 and 2 as two radially oppositely disposed channels (22) that communicate between a stepped annular recess (23) exteriorly circumscribing the center portion of the annulus (20) with the inner bore (21). The opposite ends of the annulus (20) are integral radially protruding disks (24) and (25), with their respective outer truncated annular surfaces (24') and (25') being bevelled inwardly from center to perimeter.

In order to complete the other rigid components of the plug (10), there is an annulus (26) whose inner bore is larger than the outer diameter of the threaded shaft (12) so as to accommodate its passing therethrough with space, the annulus having an interface (26') as a reversibly bevelled annular conical surface, and its outerface, preferably orthogonal to the longitudinal axis of the bore, yet having a stepped bore of slightly larger diameter at the interface between this space and the inner bore of the annulus so as to define a channelled race (26ᵣ) which accommodates a smaller elastomeric ring (R₃), as will be explained. The obverse surface (26') is a reversibly bevelled annular conical surface, which might also be "truncated", as are clearly seen in Figures 2, 2A and 2B.

A second boss in the form of an annular collar (27) has its inner bore sized to accommodate the threaded shaft, to mate with a threaded nut (28) which is adapted to thread onto the shaft and to compress all the components of the plug referred to above into one integral unit. In order to provide annular sealing between juxtaposed bevelled surfaces (13') and (24'), there is an elastomeric annular ring (R₁); similarly, there is an elastomeric annular ring (R₂) juxtaposed between truncated conical annular surfaces (25') and (26'), and elastomeric annular seal (R₃) which nests into the annular race (26ᵣ). The inner diameter of the annular ring (R₃) is sized to frictionally engage the outer diameter of the shaft (11) so as to provide a sealing fit as will be explained.

In order to insert the assembled plug (10) into the pipe interface so as to test the integrity of the internal diameter of the interface (30), and now referencing Figure 2, the assembled plug in its relaxed mode is placed into the pipe flange with the interface (30) occupying or communicating with the area defined by the annular recess (23). The nut (28) is turned down, as shown by the arrow (49) in Figure 2A, and the respective annular bevels (13') and (24') forced into closer proximity; and similarly, with juxtaposed bevels (25') and (26'), respectively forcing the respective annular rings (R₁) and (R₂) outward in the direction of their respective arrows (Ra). At the same time, fluid in the direction of the arrow (F), floods the bore (15), the oppositely disposed radial channels (17) communicating water flow into the foreshaft regions referenced (40) in Figure 2B, out the radial channel (22) of the annulus (20) so as to flood the annular space (S) defined by the plug (10) in the internal diameter of the pipe flange interface. Some of the fluid would escape, flowing in the direction of arrows (60) during initial purging of any air within the space or plenum (S) while the nut (28) is turned down in the direction of the arrow (49) eventually sealing with the space (S). The annular ring (R₃) isolates the annular space (S) between the internal bore (21) and the outside shaft diameter (11) so as to create a watertight environment.

Additional water pressure is applied so as to increase the pressure of water within space (S). The pressure of water within space (S) can be measured by a hydrostatic device, not shown, while observing the outside of the weld interface (30) to see whether any leakage occurs.

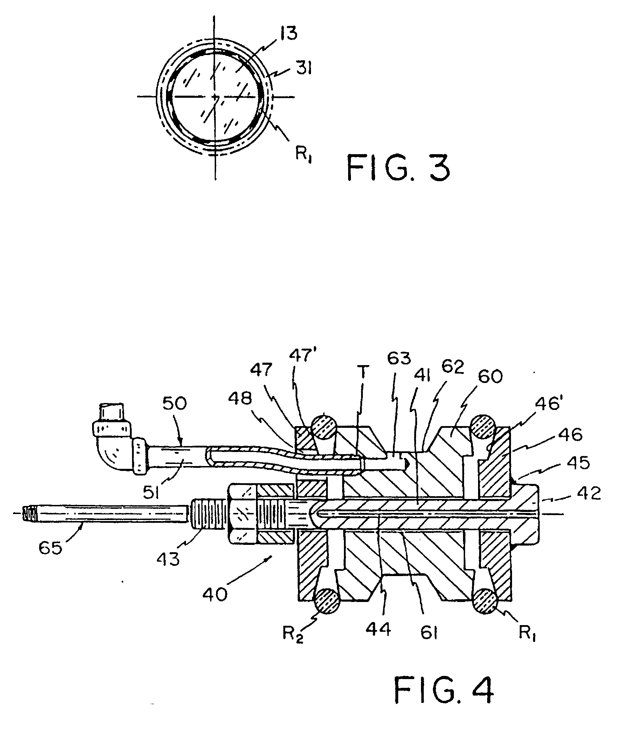

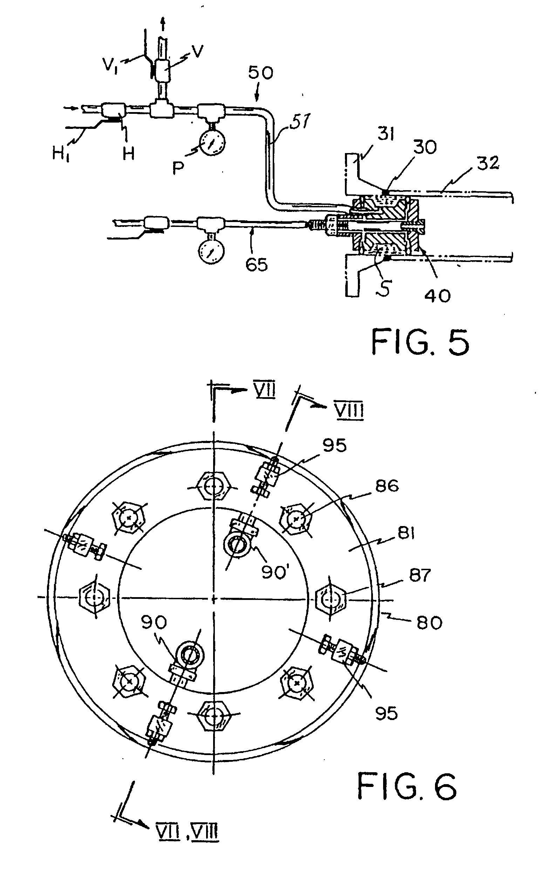

In the first embodiment of Figures 4 and 5 of the test plug according to the invention, which is particularly suitable for internal pipe diameters up to approximately 125cm because test plugs with larger diameter than about 9cm, Figures 1 through 3, become too heavy for workmen to carry thus, the same consists of a shaft (41) having an external end boss or disk (42) at one end and a threaded portion (43) at the opposite end, the shaft and disk defining a central bore (44). The disk (42) is welded at (45) to an annular end disk plate (46) whose inner margin (46') is a bevelled annulus to accommodate "O" ring (R₁). There is an opposite annular end disk (47) with a similar inner annular bevel (47') to accommodate annular ring (R₂) but the disk (47) also has an aperture therethrough (48) which allows passage of a hydrostatic flooding and testing circuit, generally shown as (50) to extend therethrough. The plug (40) includes an annular piece (60) defining an inner bore (61) which accommodates the shaft (41) and an outside circumferential race (62), the bottom of which communicates with a hydrostatic filling channel (63) communicating to the tasting circuit (50) in the fashion shown. As such, the circuit (50) has a threaded hose (51) whose distal end threads into and sealingly mates with a corresponding thread (T) defined by the outer extremity of the bore (63) to make a fluid channel passing through the disk (47) and communicating with the race (62). The bore (44) acts as a venting channel to allow venting of the internal pipe (32) when the plug (40) is being inserted into the flanged pipe bounded by the peripheral weld (30) which is put in place to sealingly attach one to the other - see Figure 5. It may also be an advantage to conduct a second testing circuit which is referenced (65) to test everything that is to the right of the plug (40), as shown in that figure. Thus, the same bore (44) acts as the venting of the space to the right of the plug (40),as during insertion and removal into the pipe (33) or, alternatively, to accommodate a second circuit for testing the pipe from plug (40) onwards to the left thereof, if this be required, by utilizing testing circuit (65).

If the space (S) which is bounded by the plug (40) and the internal pipe (32) flange (31) and circumferential weld (30) is to be tested, then preferably threaded hose (51) is positioned so as to be vertical over the bore (44) and the testing circuit (50') consist of a hydrostatic pressure gauge (P) communicating thereto and,to a venting valve (V), with turn-off and turn-on switch es, and a hydraulic fluid control valve (H) with its corresponding turn-on and turn-off (H₁). Water is periodically allowed to flow through valve (H) into space (S) by opening (H₁) and closing (V₁) and venting of the air within the space (S) is achieved by reversing valve positions (H₁) and (V₁) so air vents out of valve (V) in accordance with the arrow thereabove. This cycling occurs until the space (S) is filled with water and then pressuring of the water takes place so that the pressure gauge (P) registers the hydrostatic pressure on the circumferential weld seam (30) to test the integrity of the same.

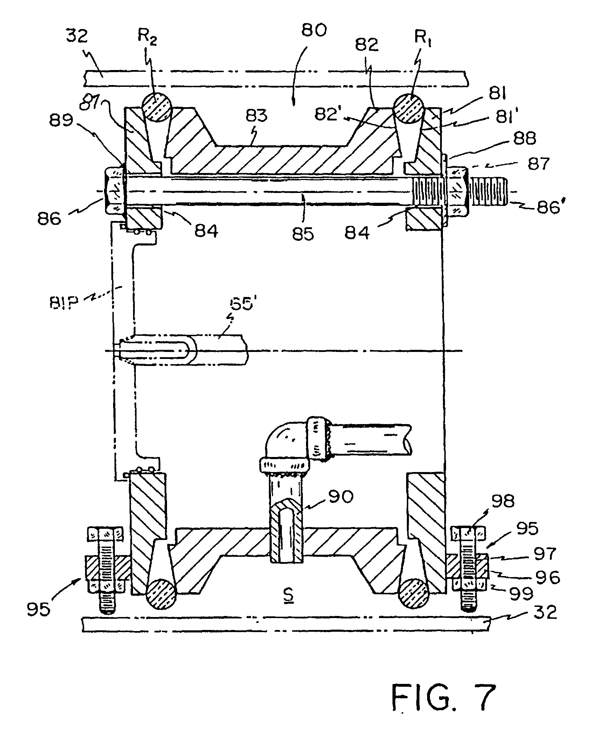

Referring Figures 6 and 7 and to the second embodiment of the invention, the same consists of an annular plug (80) consisting of mirror end annular bosses or plates (81) and an annulus (82) with an outer circumferential race (83). The juxtaposed faces of the annular plates (81) and the annulus (82) are respectively bevelled at (81') and (82'), as shown, so as to accommodate the seating of "O" rings (R₁) and (R₂) therebetween. Each of the annular disks (81) have a plurality of apertures (84) therethrough circumferentially disposed so as to permit the passage therethrough of a nut-bolt arrangement, generally shown as (85) consisting of a bolt head (86) which is welded at (89) to the exterior face of one of the annular disks (81), the opposite end of the bolts (85) having a threaded shaft portion (86') accommodating a nut (87) which can be turned down onto an underlying washer (88). The annulus (82) may have appropriate diameters, as may the disks (81) to accommodate internal pipe (32) diameters over 8" (20 cm), as may be required.

The annulus (82) defines a filling and pressure channel (90) which communicates through the annulus (82) to the outside annular race (83), and diametrically opposite thereto a venting channel (90'). The plug (80) can be inserted into large diameter pipes exceeding 8" (20 cm), the nuts (87) tied down so as to force "O" rings (R₁) and (R₂) against the inner diameter of the pipe-flange interface to be tested. Liquid media is channelled into the space (S) defined by the race (83) and the inner wall of the pipe flange interface while venting of any air exits the diametrically disposed venting channel (90'). Testing of the interface in a similar fashion occurs.

Because of the great weight of the annular plug (80), particularly when made of steel, or steel alloys such as stainless steel, each annular plate (81) has four adjusting heads (95) diametrically paired and consisting of a protruding butt (96) having a threaded bore (97) accommodating a threaded bolt (98) which extends therethrough and whose distal end is adapted to turn against the internal diameter of the pipe (32), to locate the plug (80) co-axial with the pipe (32). Locking nuts (99) may then be turned down to lock each bolt (98), as shown in phantom in Figure 7, against the internal diameter of the pipe (32) that is being tested. Thereafter, flange nuts (87) are turned down to apply the pressure on the "O" rings (R₁) and (R₂) sealing them against the inner walls of the pipe flange interface so that the annular space (S) is a sealed plenum. Hydrostatic filling of the space (S) occurs as above noted, and pressure venting in the fashion, as earlier described, can take place. It is convenient to make the annulus (20), (60), (82) from aluminum in order to reduce its weight, and in certain applications even the bosses (13), (26), (46), (47), (81) may be made from appropriate aluminum stock but in some applications, particularly in the cereal industry, the whole plug will have to be made from stainless steel in order to meet health standards.

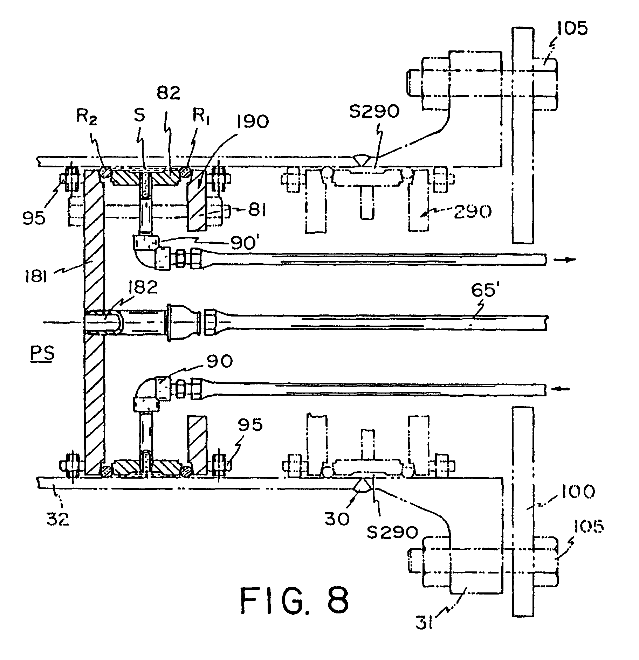

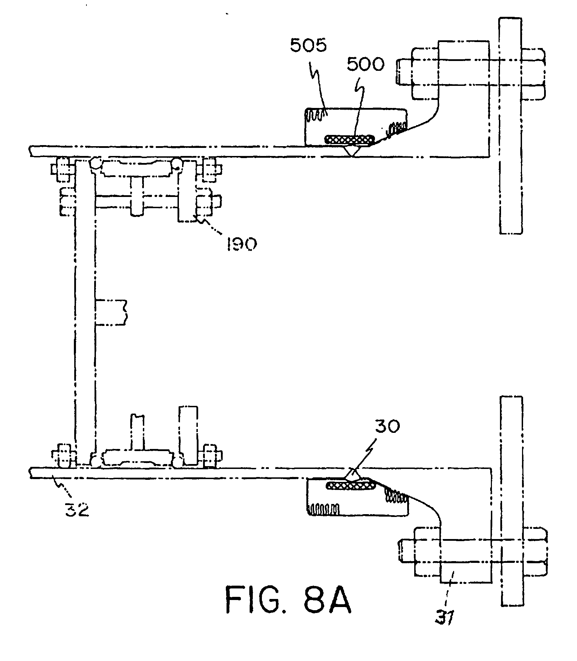

Referring now to yet a further embodiment and to Figures 8 and 8A, a test plug (190) also acts as an isolation and pipe space monitoring plug, and has an annular boss flange (81) and an opposite (annular) flange (181) in the form of a disk defining a central axial aperture (182) therethrough which communicates to a monitoring conduit reference (65') and into the internal pipe space diameter, referenced (PS), of the pipe (32) to the left of the flange (181) which can be perceived to be a long continuous pipe space of a fluid conveying conduit in an existing installation to which it is now desired that there be affixed onto the end of the pipe (32), a flange shown in phantom as (31). Thus, particularly in instances where the pipe space (PS) is part of a conduit, in a petro-chemical plant, it must first be drained of contents; nevertheless, there are residual airborne hydrocarbons in the pipe space (PS) and also embedded into the inner surface walls of the pipe space (PS). When welding to such existing pipe space (PS), present safety standards require that the pipe space (SP) walls first be cleaned; this is expensive. With the isolation test plug configuration (190), this is not necessary.

The test plug (190) has the two O rings (R1) and R2) which are urged respectively against boss (81) and annulus (82) on the one hand, and disk (181) and the opposite end of annulus (82) to urge the O rings (R1,R₂) against the inner walls of the pipe that is now defined as the plenum space (S). Cooling water may be inserted into the pipe space (S) by flowing water through conduit (90) into the plenum space (S) to outflow from conduit (90'). When cold water is used, the temperature of the pipe to the left of the plug (190) maintains the pipe at a non-flammable temperature for the hydrocarbons that may reside in the pipe space (PS). Either a gas monitor, not shown, or other temperature sensitive device may be pushed into from right to left, the testing circuit conduit (65') through the conduit (182) into the pipe space (PS) for monitoring while welding of the weld (30) takes place.

After welding, another plug (290), similar to that of (190) is positioned, as shown in phantom, on the inside surface of the pipe (32) and the integrity of the weld (30) tested by applying appropriate fluid pressures to the space, referenced (S290), defined by the O rings (R1) and (R2), the annulus (82), and the internal diameter of the interface of the pipe (32), weld (30) and flange (31). Throughout this testing the other isolation test plug (190) can be left in position. Once the integrity of the weld (30) has been assured, in some instances, it is also necessary to stress-relieve the weld (30). This is accomplished by applying an annular stress-relieving heater, referenced (500) over the weld (30); the heater has an overcovering insulation (505). The pipe-weld-flange interface (30,31,32) is brought up to the annealing temperature while water is still flowed into channel (90) and out channel (90') for plug (190), keeping cool that pipe juxtaposed to the water-filled plenum (S) and maintaining a cool temperature of the pipe to the left thereof and particularly, to the pipe space (PS). It has been found that the width of the plug between bosses (81) or between boss (81) and the disk boss (181) is preferably about 6" (15 cm) and the position of the plug (190) from the weld (30) should be at least, for safety purposes, about 2" (5 cm). In petro-chemical applications, the distal end of the conduit (65') which actually allows venting and monitoring of the pipe space (PS) is open ended and should be at least 35" (90 cm) or more away from the physical location of the plug (190). The cooling waterflow through the circuit (90), (S), (90') should be at a positive pressure of around 100 PSIG (690 kPa).

The operational sequence placing a flange, phantom flange (31), in Figures 8 and 8A, would be as follows. Drain the pipe (32) and pipe space (PS) of all hydrocarbon liquids and then place the plug (190) into place in a fashion, as earlier described and then inflow water into the annular space (S) by flowing water into conduit (90) and out of conduit (90'). The monitoring pipe or tube (65') extends at least 35" (90 cm) away from site of the flange (190) and monitors, the temperature and volatiles within the pipe space (PS), (the monitoring devices not being shown).

The flange 31 is then welded by weld (30) to the end of the pipe (32) after the pipe end has been appropriately dressed. Leaving the plug (190) in place, a second plug (290), similarly configured, is positioned on the inside surface of the weld to define a testing plenum (S290) which is flooded with water in a similar fashion to that of plug (190) thereupon the integrity of the flange-weld-pipe interface is determined. Thereafter, the second test plug (290) is removed and the weld (30) stress-relieved, as follows. Now referring to Figure 8, the test plug (190) is still left in place and the water continues to flow into and out of the space (S) via the respective conducts (90) and (90'). An annular heater (500) is placed on the outside circumference of the weld (30) and an overcovering annular insulating sleeve (505) is placed thereover and the weld (30) brought up to its annealing temperature in order to stress-relieve the pipe-weld-flange interface. After the annealing step, the annular heater (500) and insulating annulus (505) are removed; the weld allowed to become cool and then at a time convenient, the plug (190) can be dis-assembled.

## Claims

1. A plug assembly for sealing an interior surface segment of a pipe (32) from the other pipe space (PS), the pipe (32) having an internal diameter, said plug assembly comprising:
a) an annular body (60; 82) with oppositely facing annular ends and defining, on its outer perimeter, a recess (62; 83) between the annular ends;
b) a pair of bosses (46, 47; 81), each of said bosses being respectively adjacent to the annular ends of said annular body (60; 82) and coaxially therewith;
c) a pair of resilient annular members (R₁, R₂) adapted to be respectively juxtaposed between each of said bosses (46, 47; 81) and said annular ends of the annular body (60;82);
d) means (41; 85) for urging the bosses (46, 47; 81) respectively towards said annular body (60; 82) thereby deforming said resilient members (R₁, R₂) in a radially outward direction against the internal surface of said pipe (32) so as to form a sealed annular space (S) therebetween, whereby the sealed annular space (S) is defined between said recess (62; 83) on said annular body (60; 82), the pipe internal surface and said resilient members (R₁, R₂) when said resilient members (R₁,R₂) are urged against the internal surface of said pipe (32); and
e) a means (50; 90, 90') communicating through said plug assembly to said annular space (S) whereby a hydrostatic fluid may be introduced into said space (S);
**characterized in that** said plug assembly includes a vent (44; 65, 65') extending therethrough for providing communication between interior segments of said pipe (32) on opposite ends of said plug assembly.

2. The plug assembly as claimed in claim 1 wherein said means for urging comprises a shaft (41) which extends between said bosses (46, 47).

3. The plug assembly as claimed in claim 2 wherein said means communicating through said plug assembly comprises a first conduit (90) for introducing said hydrostatic fluid into said annular space (S) and a second conduit (90') for discharging said fluid from said annular space (S).

4. The plug assembly as claimed in claim 3 wherein one (46) of said bosses (46, 47) is integral to said shaft (41).

5. The plug assembly as claimed in claim 4 wherein the other (47) of said bosses (46, 47) is annular and wherein said shaft (41) extends through said annular boss (47).

6. The plug assembly as claimed in claim 5 wherein said vent (44) extends through the length of said shaft (41).

7. The plug assembly as claimed in claim 1 wherein said means for urging comprises a plurality of circumferentially spaced bolts (85) extending between said bosses (81).

8. The plug assembly as claimed in claim 7 wherein said means communicating through said plug assembly comprises a first channel (90) for introducing said hydrostatic fluid into said annular space (S) and a second channel (90') for venting said annular space (S).

9. The plug assembly as claimed in claim 8 wherein said first and second channels (90, 90') are connected directly to said annular body (82).

10. The plug assembly as claimed in claim 9 wherein a first of said pair of bosses comprises a flange (181) having a generally central aperture (182) and the second of said pair of bosses (81) comprises an annulus.

11. The plug assembly as claimed in claim 10 wherein said vent comprises a conduit extending from said aperture (182) in said first boss (181) and through said second boss (81).

12. The plug assembly as claimed in claim 9 wherein both of said bosses (81) are annular.

13. The plug assembly as claimed in claim 12 wherein said vent extends through the centers of said annular bosses (81) and said annular body (82).

14. The plug assembly as claimed in claim 13 wherein said first and second channels (90, 90') extend through one of said bosses (81).

15. The plug assembly as claimed in claim 14 further including a plurality of centering bolts (98) circumferentially spaced about one of said bosses (81).

16. A method of applying a hydrostatic pressure to the interior surface of a segment of a pipe (32) having an internal diameter, said method comprising the steps of:
1) positioning the plug assembly (40; 80; 190) of claim 1 within said pipe, at said segment;
2) urging said bosses (46, 47; 81) towards said annular body (60; 82), thereby creating said sealed annular space (S);
3) filling said annular space (S) with a hydrostatic fluid, under pressure, through said means communicating through said plug assembly;
4) establishing a pressure within said annular space (S).

17. A method as claimed in claim 16 wherein the diameter of said plug assembly (40; 80; 190) is slightly less than the diameter of said pipe (32) being tested.

18. A method as claimed in claim 17 wherein said pressure within said annular space (S) is monitored.

19. A method as claimed in claim 16 for testing the structural integrity of a segment of a pipe (32) wherein said method further includes monitoring said pressure within said annular space (S).

20. A method as claimed in claim 16 for isolating a section of a pipe (32) wherein one of said bosses comprises a flange (181) having a generally central aperture (182) said other boss comprising an annulus (81) and said vent comprises a conduit (65') extending from said aperture (182) through said other boss.

21. A method as claimed in claim 20 wherein said hydrostatic fluid is used to maintain said segment of pipe (32) at a desired temperature.

22. A method as claimed in claim 16 for isolating a section of a pipe (32) wherein both of said bosses (81) are annular and said vent (65') extends through said bosses (81) and said annular body (82).

23. A method as claimed in claim 22 wherein said hydrostatic fluid is used to maintain said segment of pipe (32) at a desired temperature.

## Patentansprüche

1. Stopfenbaugruppe zum Abdichten eines inneren Flächensegmentes eines Rohres (32) gegenüber dem anderen Rohrraum (PS), wobei das Rohr (32) einen Innendurchmesser aufweist, und die Stopfenbaugruppe versehen ist mit:
a) einem Ringkörper (60; 82) mit in entgegengesetzen Richtungen weisenden, ringförmigen Enden und der, an seinem äusseren Umfang, mit einer Aussparung (62; 83) zwischen den ringförmigen Enden versehen ist;
b) zwei Druckgliedern (46, 47; 81), wobei jeweils eines der Druckglieder angrenzend an eines der ringförmigen Enden des Ringkörpers (60; 82) angeordnet und koaxial zu diesem ist;
c) zwei nachgiebigen, ringförmigen Elementen (R₁, R₂), die jeweils zwischen einem der Druckglieder (46, 47; 81) und dem angrenzenden, ringförmigen Ende des Ringkörpers (60; 82) angeordnet sind;
d) Mittel (41; 85), um die Druckglieder (46, 47; 81) gegen den Ringkörper (60; 82) anzuziehen, um die nachgiebigen Elemente (R₂, R₂) radial auswärts gegen die Innenfläche des Rohres (32) zu verformen und einen abgedichteten Ringraum (S) dazwischen zu bilden, wobei der abgedichtete Ringraum (S) eingeschlossen ist zwischen der Aussparung (62; 83) des Ringkörpers (60; 82), der Rohrinnenfläche und den nachgiebigen Elementen (R₁, R₂) wenn die nachgiebigen Elemente (R₁, R₂) gegen die Innenfläche des Rohres (32) gedrückt sind; und
e) einem Verbindungsmittel (50; 90, 90'), das durch die Stopfenbaugruppe mit dem Ringraum (S) in Verbindung ist, um ein hydrostatisches Fluid in den Ringraum (S) einzuleiten;
**dadurch gekennzeichnet, dass** die Stopfenbaugruppe eine Entlüftung (44; 65, 65') hat, die durch die Stopfenbaugruppe hindurchführt, um eine Verbindung zwischen inneren Segmenten des Rohres (32) auf gegenüberliegenden Enden der Stopfenbaugruppe herzustellen.

2. Stopfenbaugruppe nach Anspruch 1, wobei das Mittel zum Anziehen einen Schaft (41) aufweist, der sich zwischen den Druckgliedern (46, 47) erstreckt.

3. Stopfenbaugruppe nach Anspruch 2, wobei das Verbindungsmittel durch die Stopfenbaugruppe eine erste Leitung (90) aufweist zum Einleiten des hydrostatischen Fluids in den Ringraum (S) und eine zweite Leitung (90') hat zum Ableiten des Fluids aus dem Ringraum (S).

4. Stopfenbaugruppe nach Anspruch 3, wobei eines (46) der Druckglieder (46, 47) an dem Schaft (41) angeformt ist.

5. Stopfenbaugruppe nach Anspruch 4, wobei das andere (47) der Druckglieder (46, 47) ringförmig ist und der Schaft (41) durch das ringförmige Druckglied (47) hindurchragt.

6. Stopfenbaugruppe nach Anspruch 5, wobei die Entlüftung (44) sich durch die Länge des Schaftes (41) erstreckt.

7. Stopfenbaugruppe nach Anspruch 1, wobei das Mittel zum Anziehen eine Vielzahl von in Umfangsrichtung voneinander beabstandeten Schraubbolzen (85) aufweist, die sich zwischen den Druckgliedern (81) erstrecken.

8. Stopfenbaugruppe nach Anspruch 7, wobei das Verbindungsmittel durch die Stopfenbaugruppe einen ersten Kanal (90) aufweist zum Einleiten des hydrostatischen Fluids in den Ringraum (S) und einen zweiten Kanal (90') hat zum Entlüften des Ringraumes (S).

9. Stopfenbaugruppe nach Anspruch 8, wobei der erste und der zweite Kanal (90, 90') unmittelbar am Ringkörper (82) befestigt sind.

10. Stopfenbaugruppe nach Anspruch 9, wobei ein erstes der zwei Druckglieder aus einer Scheibe (181) mit einer im Wesentlichen mittig angeordneten Öffnung (182) und das zweite Druckglied (81) aus einem Ringkörper besteht.

11. Stopfenbaugruppe nach Anspruch 10, wobei die Entlüftung eine Leitung aufweist, die sich von der Öffnung (182) in dem ersten Druckglied (181) und durch das zweite Druckglied (81) erstreckt.

12. Stopfenbaugruppe nach Anspruch 9, wobei beide Druckglieder (81) ringförmig sind.

13. Stopfenbaugruppe nach Anspruch 12, wobei die Entlüftung sich durch die Mitten der ringförmigen Druckglieder (81) und des Ringkörpers (82) erstreckt.

14. Stopfenbaugruppe nach Anspruch 13, wobei der erste und der zweite Kanal (90, 90') sich durch eines der Druckglieder (81) erstrecken.

15. Stopfenbaugruppe nach Anspruch 14, des Weiteren mit einer Vielzahl von Zentrierbolzen (98), die in Umfangsrichtung beabstandet um eines der Anpressglieder (81) herum angeordnet sind.

16. Verfahren zum Anlegen eines hydrostatischen Druckes an die Innenfläche eines Segmentes eines Rohres (32) mit einem Innendurchmesser, wobei das Verfahren folgende Schritte aufweist:
1) Einsetzen der Stopfenbaugruppe (40; 80; 190) gemäss Anspruch 1 in das Rohr, an dem Segment;
2) Anziehen der Druckglieder (46, 47; 81) gegen den Ringkörper (60; 82), zum Erzeugen des abgedichteten Ringraumes (S);
3) Füllen des Ringraumes (S) mit einem hydrostatischen Fluid, unter Druck, über die Verbindungsmittel durch die Stopfenbaugruppe;
4) Aufbauen eines Druckes in dem Ringraum (S).

17. Verfahren nach Anspruch 16, wobei der Durchmesser der Stopfenbaugruppe (40; 80; 190) etwas kleiner ist als der Durchmesser des zu prüfenden Rohres (32).

18. Verfahren nach Anspruch 17, wobei der Druck in dem Ringraum (S) überwacht wird.

19. Verfahren nach Anspruch 16 zum Prüfen der strukturellen Unversehrtheit eines Segments eines Rohres (32), wobei das Verfahren des Weiteren den Schritt aufweist des Überwachens des Druckes in dem Ringraum (S).

20. Verfahren nach Anspruch 16 zur Isolation eines Abschnittes eines Rohres (32), wobei eines der Druckglieder aus einer Scheibe (181) mit einer im Wesentlichen mittigen Öffnung (182) und das andere Druckglied aus einem Ringkörper (81) besteht, und die Entlüftung eine Leitung (65') aufweist, die sich von der Öffnung (182) durch das andere Druckglied erstreckt.

21. Verfahren nach Anspruch 20, wobei das hydrostatische Fluid benutzt wird, um das Segment des Rohres (32) auf einer erwünschten Temperatur zu halten.

22. Verfahren nach Anspruch 16 zur Isolation eines Abschnittes eines Rohres (32), wobei beide Druckglieder (81) ringförmig sind und die Entlüftung (65') sich durch die Druckglieder (81) und den Ringkörper (82) erstreckt.

23. Verfahren nach Anspruch 22, wobei das hydrostatische Fluid benutzt wird, um das Segment des Rohres (32) auf einer erwünschten Temperatur zu halten.

## Revendications

1. Ensemble de bouchon pour étanchéifier un segment de surface interne d'un tuyau (32) par rapport à l'autre volume du tuyau (PS), le tuyau (32) ayant un diamètre interne, l'ensemble de bouchon comportant :
a) un corps annulaire (60 ; 82) avec des extrémités annulaires orientées en directions opposées et définissant, sur sa circonférence externe, un évidement (62 ; 83) entre les extrémités annulaires ;
b) une paire de bosses (46, 47 ; 81), chacune de ces bosses se trouvant respectivement à proximité des extrémités annulaires du corps annulaire (60 ; 82) et étant coaxiale avec celle-ci ;
c) une paire d'éléments annulaires élastiques (R₁, R₂) conçus en vue d'être respectivement juxtaposés entre chacune des bosses (46, 47 ; 81) et les extrémités annulaires du corps annulaire (60 ; 82) ;
d) un moyen (41 ; 85) pour forcer les bosses respectives vers le corps annulaire (60 ; 82) afin de déformer les éléments élastiques (R₁, R₂) radialement vers l'extérieur contre la surface interne du tuyau (32) en vue de former une cavité annulaire étanche (S) entre les bosses, cette cavité annulaire étanche (S) étant définie entre l'évidement (62 ; 83) du corps annulaire (60 ; 82), la surface interne du tuyau et les éléments élastiques (R₁, R₂) lorsque ces éléments élastiques (R₁, R₂) sont forcés contre la surface interne du tuyau (32) ; et
e) un moyen (50 ; 90, 90') communiquant à travers l'ensemble de bouchon avec ladite cavité annulaire (S) de sorte qu'un fluide hydraulique puisse être introduit dans cette cavité (S) ;
**caractérisé en ce que** ledit ensemble de bouchon comporte un moyen de purge (44 ; 65, 65') s'étendant à travers l'ensemble de bouchon pour établir une communication entre des segments internes du tuyau (32) aux extrémités opposées de l'ensemble de bouchon.

2. Ensemble de bouchon selon la revendication 1, dans lequel ledit moyen pour forcer comporte une tige (41) qui s'étend entre les bosses (46, 47).

3. Ensemble de bouchon selon la revendication 2 dans lequel le moyen communiquant à travers l'ensemble de bouchon comporte un premier conduit (90) pour introduire ledit fluide hydrostatique dans la cavité annulaire (S) et un second conduit (90') pour décharger ledit fluide de cette cavité annulaire.

4. Ensemble de bouchon selon la revendication 3, dans lequel l'une (46) desdites bosses (46, 47) fait partie intégrante de la tige (41).

5. Ensemble de bouchon selon la revendication 4, dans lequel l'autre (47) desdites bosses (46, 47) est annulaire et l'arbre (41) s'étend à travers cette bosse annulaire (47).

6. Ensemble de bouchon selon la revendication 5, dans lequel le moyen de purge (44) s'étend par la longueur de la tige (41).

7. Ensemble de bouchon selon la revendication 1, **caractérisé en ce que** ledit moyen pour forcer comporte une pluralité de boulons (85) s'étendant entre les bosses (41) et espacés l'un de l'autre en direction circonférentielle.

8. Ensemble de bouchon selon la revendication 7, dans lequel ledit moyen communiquant à travers l'ensemble de bouchon comporte un premier canal (90) pour introduire ledit fluide hydrostatique dans la cavité annulaire (S) et un second canal (90') pour purger cette cavité annulaire (S).

9. Ensemble de bouchon selon la revendication 8, dans lequel le premier et le second canal (90, 90') sont connectés directement au corps annulaire (82).

10. Ensemble de bouchon selon la revendication 9, dans lequel une première bosse de la paire de bosses est un disque (181) ayant une ouverture approximativement centrale (182) et la seconde bosse (81) est un anneau.

11. Ensemble de bouchon selon la revendication 10, dans lequel ledit moyen de purge comporte un conduit s'étendant de ladite ouverture (182) formée dans la première bosse (181) et à travers la seconde bosse (81).

12. Ensemble de bouchon selon la revendication 9, dans lequel les deux bosses (81) sont annulaires.

13. Ensemble de bouchon selon la revendication 12, dans lequel le moyen de purge s'étend par les centres des bosses annulaires (81) et du corps annulaire (82).

14. Ensemble de bouchon selon la revendication 13, dans lequel le premier et le second canal (90, 90') s'étendent à travers l'une des bosses (81).

15. Ensemble de bouchon selon la revendication 14 comportant en outre une pluralité de boulons de centrage (98) espacés l'un de l'autre circonférentiellement autour de l'une des bosses (81).

16. Procédé pour appliquer une pression hydrostatique à la surface interne d'un segment d'un tuyau (32) ayant un diamètre interne, ledit procédé comportant les étapes suivantes :
1) placer l'ensemble de bouchon (40 ; 80 ; 190) selon la revendication 1 à l'intérieur du tuyau, dans le segment ;
2) forcer les bosses (46, 47 ; 81) vers le corps annulaire (60 ; 82), en vue de créer ladite cavité étanche (S) ;
3) remplir ladite cavité annulaire (S) par un fluide hydrostatique sous pression, introduit par le moyen communiquant à travers l'ensemble de bouchon ;
4) établir une pression à l'intérieur de l'espace annulaire (S).

17. Procédé selon la revendication 16, dans lequel le diamètre de l'ensemble de bouchon (40 ; 80 ; 190) est légèrement inférieur au diamètre du tuyau (32) à mettre à l'épreuve.

18. Procédé selon la revendication 17, dans lequel la pression dans l'espace annulaire (S) est surveillée.

19. Procédé selon la revendication 16 pour mettre à l'épreuve l'intégrité structurale d'un segment de tuyau (32), dans lequel le procédé comporte en outre l'étape de surveiller la pression à l'intérieur de la cavité annulaire (S).

20. Procédé selon la revendication 16 pour isoler une section d'un tuyau (32) dans lequel l'une des bosses est formée par un disque (181) ayant une ouverture approximativement centrale (182), l'autre bosse consiste en un corps annulaire (81) et le moyen de purge comporte un conduit (65') s'étendant de ladite ouverture (182) et à travers l'autre bosse.

21. Procédé selon la revendication 20, dans lequel le fluide hydrostatique est utilisé pour maintenir ledit segment de tuyau (32) à une température désirée.

22. Procédé selon la revendication 16 pour isoler une section d'un tuyau (32) dans lequel les deux bosses (81) sont annulaires et ledit moyen de purge (65') s'étend à travers les deux bosses (41) et ledit corps annulaire (82).

23. Procédé selon la revendication 22, dans lequel le fluide hydrostatique est utilisé en vue de maintenir ledit segment de tuyau (32) à une température désirée.
